# EUROPEAN PATENT SPECIFICATION

(11) **EP 0 675 085 B1**
(45) Date of publication and mention of the grant of the patent: **14.01.1998**
(21) Application number: 95103929.6
(22) Date of filing: 17.03.1995
(51) Int. Cl.: C03C 8/24, H01J 9/26

(54) **Fusion seal, sealing materials and use in CRT**
Schmelzversiegelung, Versiegelungswerkstoffe und Verwendung in Kathodenstrahlrohr
Scellement à fusion, matériaux de scellement et utilisation dans tube à rayons cathodiques

(30) Priority: 31.03.1994 US 221400; 09.12.1994 US 352510
(43) Date of publication of application: 04.10.1995
(73) Proprietor: CORNING INCORPORATED, Corning, N.Y. 14831 (US)
(72) Inventor: Morena, Robert Michael, Corning Inc., Corning, NY 14831, SP FR (US)
(74) Representative: Marchant, James Ian

(56) References cited:
- US-A- 5 246 890
- US-A- 5 281 560

## Description

### FIELD OF THE INVENTION

A fusion seal and a sealing material for joining two surfaces and being a mixture of a tin-zinc-phosphate glass frit with a mill addition.

### BACKGROUND OF THE INVENTION

The invention is broadly applicable to joining glass, metal and ceramic components. However, it is particularly applicable to producing envelopes for cathode ray tubes, and the description is so directed.

It is customary in producing cathode ray tube envelopes to press funnel and faceplate components separately. These components are then joined with a fusion seal employing a mid-temperature sealing glass frit.

Lead-zinc-borate sealing glasses, both crystallizing and non-crystallizing, have been used commercially for this purpose over a long period of time. These glasses have proven very successful for the purpose. However, there has been a continuing search for a sealing material that would retain all of the attributes of the lead glasses, but would further improve on some of their features.

A driving force in this search has been a desire for a glass having an even lower sealing temperature than the lead-zinc-borate type glass. Such a lower sealing temperature would be more compatible with thermally sensitive components and coatings present in electronic products such as cathode ray tubes. More recently, the search has been accelerated by the desire to eliminate lead for health and safety reasons.

The materials search led to development of tin-zinc-phosphate glasses as described in United States Patents No. 5,246,890 (Aitken et al.) and No. 5,281,560 (Francis et al.). The glasses described in these patents are lead-free, and provide somewhat lower sealing temperatures in the range of 400-450°C.

The Aitken et al. glasses are of particular interest for use in producing seals in cathode ray tube envelopes because of their relatively low tin oxide contents. These glasses are lead-free and have compositions containing 25-50 mole % P₂O₅ and SnO and ZnO in amounts such that the mole ratio of SnO:ZnO is in the range of 1:1 to 5:1. The glass compositions may further contain up to 20 mole % of modifying oxides including up to 5 mole % SiO₂, up to 20 mole % B₂O₃, up to 5 mole % alkaline earth metal oxide, and up to 5 mole % Al₂O₃. They may also contain one or more crystallization promoters selected from 1 to 5 mole % zircon and/or zirconia and 1-15 mole % R₂0 (Li₂O and/or Na₂O and/or K₂O). Additionally, the composition may include a seal adherence promoter selected from up to 5 mole % W0₃, up to 5 mole % MoO₃, up to 0.10 mole % Ag metal and mixtures.

In producing a sealing material, mill additions to the sealing glass may be made in amounts up to about 30% by weight with no more than 15% being preferred. These additions are made to provide a sealing material having a lower effective coefficient of thermal expansion (CTE). The mill additions include metal pyrophosphate cryslline materials, cordierite, solid solutions of beta-spodumene or beta-eucryptite, silica and quartz glasses and Invar.

The manufacturing process for cathode ray tubes imposes severe restraints on a frit intended for use in sealing envelope components. One such restraint arises from the need to conduct the sealing operation at temperatures below 450°C. Higher temperatures would exceed the strain point of the funnel glass. This requirement, in turn, necessitates that the viscosity of a sealing frit must be in the range of 10²-10³ MP·as (10³-10⁴ poises) in the temperature range of 440-450°C. Otherwise, the frit will have insufficient flow to form a seal with a strong hermetic bond.

Following the sealing operation, the panel-funnel assembly is reheated under vacuum to a temperature in the range of 300-400°C in an exhaust bake-out process. This bake-out removes volatile constituents of the electronic system. It establishes the needed vacuum level in the tube to assure long tube life. The frit requirement for this second step in the process is essentially the opposite of that needed for successful sealing. To survive the exhaust bake-out, the frit must be rigid at exhaust temperatures. This requires a minimum viscosity of 10⁸ MP·as (10⁹ poises) to avoid movement in the seal and resulting breakage or loss of vacuum.

These dual viscosity/temperature requirements are met currently by employing high lead frits in the PbO-ZnO-B₂O₃ system that form a crystallized seal. These lead frits are initially vitreous, but have a small amount of zircon or alumina added as a mill addition to induce crystallization. The frits exhibit excellent flow during the initial portion of the hold at the 440-450° sealing temperature. Near the end of this hold period, they undergo rapid crystallization to a degree greater than 95%. This forms a strong, rigid seal which remains rigid during the exhaust bake-out process.

Frits in the SnO-ZnO-P₂O₅ ternary system exhibit good flow properties at temperatures as low as 360°C. They also have expansion coefficients close to the 95-100 x 10⁻⁷/°C range characteristic of current panel and funnel glasses. However, the glass frits are relatively resistant to crystallization. While it is possible to crystallize them with a combination of additives, the extent of crystallization is relatively low. Consequently, the crystallized material behaves essentially as a vitreous frit. As a result, these frits form good seals, but have not been successful in surviving the exhaust process.

Currently there are two schools of thought relative to the bakeout process. Traditionally, bakeout temperatures close to 400°C have been required. However, presently it is thought that bakeout temperatures below 350°C may be satisfactory. The present invention is predicated on adoption of mill additions adapted to meet these different bakeout conditions. It addresses the problem with a sealing material consisting essentially of 60-90% SnO-ZnO-P₂O₅ glass frit and 10-40% of a mill addition including alumina, zircon, or mixtures thereof.

In accordance with one aspect of the invention, the mill addition causes the sealing material to undergo a substantial change after formation of a seal. Specifically, the seal does not undergo a decrease in viscosity when the seal is reheated. As a result, a seal exhibits non-viscoelastic behavior and the viscosity remains relatively constant up to a bakeout temperature of 380-400°C so that the seal remains rigid.

A second aspect of the invention adopts a rather different approach. It utilizes a mill addition that increases the material set point, rather than exhibiting non-viscoelastic behavior. Thus, it does not impart a relatively constant viscosity-temperature relationship as a seal is reheated. Rather, it increases the effective set point so that a seal remains relatively rigid at bakeout temperature below 350°C.

### SUMMARY OF THE INVENTION

According to one aspect, the present invention provides a fusion sealing material consisting essentially of at least 60% by weight of a SnO-ZnO-P₂O₅ glass frit mixed with up to 40% of a mill addition including alumina and zircon, which consists of either 10-30% alumina with up to 30% zircon and 0-15% of a further additive or 5-40% zircon with up to 10% alumina, the total of alumina and zircon being at least 15% and 0-15% of a further additive, the additive amounts being based on the sealing material total, with the proviso that the mill addition does not include 10% alumina and 25% zircon, and wherein the sealing material forms a viscoelastic seal having a set point of 300-350°C when the mill addition has an alumina content below 10%, and forms a non-viscoelastic seal when the mill addition has an alumina content above 10%.

According to another aspect, the present invention provides a fusion seal between the surfaces of two bodies, the fusion seal being the final product of a fusion sealing material as defined above.

According to a further aspect, the present invention provides a method of altering the viscosity in a fusion seal to increase the temperature at which the seal can be baked out without deformation, the method comprising heating to a sealing temperature a mixture consisting essentially of at least 60% by weight of SnO-ZnO-P₂O₅ glass frit mixed with up to 40% by weight of a mill addition including alumina and zircon, which consists of either 10-30 % alumina with up to 30% zircon and 0-15% of a further additive or 5-40% zircon with up to 10% alumina, the total of alumina and zircon being at least 15%, and 0-15% of a further additive, the additive amounts being based on the sealing material total, with the proviso that the mill addition does not include 10% alumina and 25% zircon, and wherein the viscosity of the seal is increased to provide a set point of at least 300°C with a mill addition containing less that 10% alumina, thereby enabling the seal to be baked out at a temperature up to 350°C, and wherein the viscosity is so altered as to render the seal non-viscoelastic by a mill addition containing more than 10% alumina, thereby enabling the seal to be baked out at a temperature of 350-400°C.

### BRIEF DESCRIPTION OF THE DRAWING

In the accompanying drawing,
FIGURE 1 is a side view in cross-section of a typical cathode ray tube envelope showing a fusion seal between the funnel and panel members.
FIGURES 2 and 3 are graphical representations illustrating the present invention.

### DESCRIPTION OF THE INVENTION

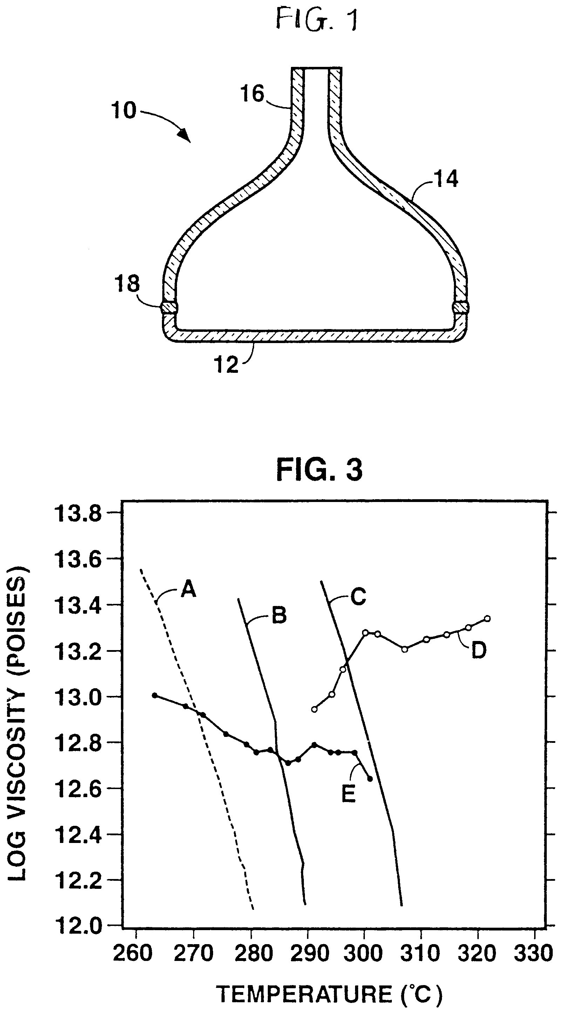

FIGURE 1 in the accompanying drawing shows a typical CRT envelope blank 10 composed of a faceplate portion 12, a funnel portion 14 and a neck portion 16. Faceplate 12 and funnel 14 are joined by a fusion seal 18 between the peripheral edges of the faceplate and funnel. The present invention is primarily concerned with fusion seal 18, and with an improved material for, and method of, producing that seal.

In producing seal 18, the SnO-ZnO-P₂O₅ sealing glasses disclosed in the Aitken *et al* patent, and described in the Background section of this application are employed. Accordingly, reference is directed to this patent for further description of this aspect of the invention.

It is a feature of the present invention that appreciable quantities of certain crystalline materials are added as mill additions to powdered SnO-ZnO-P₂O₅ glass frits as disclosed in the Aitken *et al* patent. It is, of course, well known to make mill additions to sealing glasses, primarily to lower the effective CTE of the glass frit. In fact, the Aitken *et al* patent discloses several mill additions for that particular purpose.

The present invention contemplates the optional use of such additions for that purpose, and in an amount up to 15% of the sealing material. These additives include cordierite, metal pyrophosphates, beta-spodumene and beta-eucryptite, quartz, silica glasses and Invar. The partial substitution neither enhances nor detracts from the effect of mill additions that are characteristic of the present invention.

The invention is first described with respect to production of a fusion seal that exhibits non-viscoelastic behavior. To produce this type of seal, a mill addition of alumina in conjunction with zircon, is made to a SnO-ZnO-P₂O₅ glass frit. The mill addition has a unique effect on the high-temperature viscosity of the SnO-ZnO-P₂O₅ glass frits. This effect especially occurs in the region critical to successful bake-out of a cathode ray tube envelope. That region is 10⁹ to 10¹³ poises (10⁸-10¹² MPas). The mill additives play a role that is distinctly different from previously known mill additions.

The mill addition requires more than 10% alumina to produce the unique non-viscoelastic effect. Up to about 30% may be employed without seriously impairing sealing at about 450°C.

The mill addition then includes from more than 10% up to 30% alumina, with up to 30% zircon, and optionally contains 0-15% of the aforementioned CTE-reducing additive. All amounts are based on the total sealing mixture being taken as 100%. The mill addition will constitute up to 40% of the total mixture.

The exact nature, and mode of operation, of the phenomenon affecting viscosity-temperature behavior in accordance with the invention is not definitely known. However, it is believed that the phenomenon initiates, but is not completed, during the sealing cycle. Rather, it appears that the effect culminates as the seal is reheated, in particular as a sealed envelope is reheated for bakeout and exhaust purposes

It is believed that the glass frit in the sealing material initially softens, and wets the peripheral surfaces on which it is applied, in the usual manner to form a seal. During this sealing step, however, the mill addition starts to form a stiffening network of some nature. Normally, cooling of the sealed envelope interrupts the process. The stiffening process then proceeds as the sealed envelope, or other body, is reheated for bakeout purposes. This forms a rigid seal that resists flow, and consequent deformation, during the bakeout.

The unique non-viscoelastic effect achieved by the mill addition of the present invention is illustrated in FIGURE 3 of the accompanying drawing. That FIGURE is a graphical representation wherein temperature in °C is plotted along the horizontal axis, and log viscosity in poises is plotted along the vertical axis.

FIGURE 3 shows viscosity-temperature curves based on data obtained by measurements made on five different sealing material systems. Systems A, B, D and E employed a SnO-ZnO-P₂O₅ glass frit containing 33 mole % P₂O₅ and SnO and ZnO in a molar ratio of 3.5:1. Mill additions were made in percent by weight of the sealing mixture.

The systems were:
A. Glass frit only.
B. 70% glass frit plus 30% zircon, 0% alumina.
C. 72% glass frit plus 21% zircon and 7% alumina.
D. 70% glass frit plus 15% each of zircon and alumina.
E. 70% glass frit plus 20% zircon and 10 % alumina.
The curves in FIGURE 3 are identified by the same letter indicia.

The viscosity data plotted in FIGURE 3 were obtained by a bending beam viscometer (BBV) method. In this method, a specimen in the form of a thin beam is suspended between two points with a small load suspended at the midpoint of the beam. The rate of deflection of the specimen is measured as a function of temperature. This measuring technique is particularly applicable for present purposes where viscosity values in the range of 10¹¹-10¹² MP·as (10¹²-10¹³ poises) are involved.

The data plotted in FIGURE 3 were obtained from measurements made on fired bars. The bars were prepared by dry-pressing blends of frit powder together with any added mill addition. A few drops of isopropanol were added to 30 grams of the dry mix to aid in pressing. Each particular blend was made by roller milling the material in a plastic jar to provide a homogeneous mixture. This milling step was followed by sieving the material through a 100 mesh screen to break up any soft agglomerates. Each pressed bar was fired at 450°C for one hour, a typical envelope sealing schedule, with the exception of the "glass frit only" material (A). This bar was sintered at 370°C for one hour. Flow would be too great at 450°C to obtain the minimum thickness needed for the test beam. All of the blends showed excellent flow at their respective sintering temperature.

The blends were made with the same base glass frit, a SnO-ZnO-P₂O₅ frit with SnO/ZnO molar ratio of 3.5:1, and 33 mole % P₂O₅. Each mill addition was made in percent by weight based on the total blend.

It will be observed that the viscosity-temperature curves for both the unfilled frit (A), and the frit filled with 30% zircon (B), are similar in nature. Each shows a sharp linear decrease in log viscosity with increasing temperature. This is what would be expected from a material undergoing viscous flow. The 10¹² MP·as (10¹³ poise) temperature for the unfilled frit (A) was approximately 272°C. The addition of 30 parts by weight zircon to this frit (B) resulted in a stiffening of the frit, with the 10¹² MP·as (10¹³ poise) temperature increasing to 287°C. The test specimens of both of these compositions showed considerable permanent curvature following the test. This attested to a large amount of viscous flow occurring during the test.

The viscosity-temperature curves for the other two specimens (D and E) are distinctly different from those for A and B. D and E are curves for the specimens of frit plus 10% alumina plus 20% zircon (10/20 blend), and frit plus 15% alumina plus 15% zircon (15/15 blend), respectively. It is apparent that these log viscosity curves do not show a linear decrease with increasing temperature. Rather, the curves are relatively unchanged with increasing temperature, or even show an increase with increasing temperature. This represents non-viscoelastic behavior.

The test specimens from the D and E blends were examined after completion of the test. They appeared essentially straight, that is, not permanently deformed. Thus, there was no evidence of any viscous flow occurring during either test. Yet both frit blends (D and E) flowed well during the sintering firing at 450°C, and contained approximately the same amount of glass as the 0/30 blend.

Fired samples of both blends D and E were examined using scanning electron microscopy, x-ray diffractometry, or differential scanning calorimetry. No evidence of crystallization, associated with the presence of filler particles, was observed. Following this, specimens were more carefully examined using the scanning electron microscopy in the back-scattered mode of observation to emphasize compositional differences. This examination failed to show any evidence either of partial dissolution of the additive particles in the base glass, or of any chemical interaction between those particles and the frit. Similarly, no sign of any microcracking about any of the particles was observed in any of the studies.

In addition to the sealing mixtures for which curves are shown in FIGURE 3, a number of other mixtures have been considered. The TABLE below shows the composition of these mixtures in percent by weight of the mixtures. Whether the mixture showed non-viscoelastic behavior, or not, is indicated by YES (positive) or NO (negative).

**TABLE**

| Al₂O₃ | Zircon | Glass | Effective |
|---|---|---|---|
| 5 | 25 | 70 | NO |
| 10 | 5 | 85 | NO |
| 15 | 5 | 80 | YES |
| 20 | 0 | 80 | YES |
| 20 | 5 | 75 | YES |
| 25 | 0 | 75 | YES |

It is felt that the anomalous behavior of the alumina or alumina-zircon mill addition in the SnO-ZnO-P₂O₅ glass frit arises from a physical effect caused by the formation of an interlocking (or approximately interlocking) network. This network is thought to be set up within the frit after some initial period of viscous flow during the formation of a seal. With a mill addition of about 30 parts by weight, the particles of the additives essentially constitute a near-continuous phase. Any initial flow, such as would occur during the firing of a seal in a CRT envelope, could result in the establishment of an interlocking network. The glass would be confined to regions or cells between the filler network so it would be unable to dominate subsequent flow behavior. Alumina appears to play the dominant role in this behavior. Possibly this is because of some particle morphological parameter. It may also be due to good wetting of the alumina particles by phosphate glasses.

The development work described above was done with a base glass having an SnO/ZnO ratio of 3.5:1. However, the anomalous effect has been observed employing glasses having lower SnO/ZnO ratios down to about 2.0:1, and with higher SnO/ZnO ratios up to about 5.0:1 or higher. However, with the aim of meeting the dual requirements of both adequate flow at sealing temperature and high enough viscosity at exhaust temperature, a SnO/ZnO ratio in the range of 3.0-5.0/1 is preferred with a 3.5-4.5:1 ratio being considered most preferable.

The anomalous effect has also been observed in blends employing the mill additions described above with modifications of the basic glass frit composition. Thus, additions of WO₃, Al₂O₃, and B₂O₃ additions to the base glass, as described in the Aitken et al. patent, have had no apparent effect on the anomalous viscosity behavior. Also, partial replacement in the mill addition by other additives, such as crystalline pyrophosphates and cordierite, have not inhibited the anomalous behavior. Thus, these additions may be made for their known purpose of reducing the effective CTE of the mixture.

The alternative form of the invention involves raising the set point of the sealing material to provide a seal that will permit tube bakeout at a temperature below 350°C, preferably in the range of 320-340°C. This requires a mill addition of at least 15% of a zircon-alumina mixture to create an effective set point. Up to about 40% may be employed without seriously impairing sealing at about 450°C. A mixture of alumina and zircon is employed with the alumina less than 10%. The presence of alumina enhances the mechanical strength of a seal.

The mill addition then includes 15-40% zircon, with from up to 10% alumina. It optionally contains 0-15% of the aforementioned CTE-reducing additive. All amounts are based on the total sealing mixture being taken as 100%. The mill addition will constitute 15-40% of the total mixture.

This alternative form of the invention is founded on the discovery that a mill addition of zircon, with up to 10% alumina, to a SnO-ZnO-P₂O₅ glass frit produces a substantial effect on the set point of the resulting sealing material. The effect of the mill addition is to increase the set point of the fused mixture to such an extent that a seal remains relatively rigid during a bakeout providing the bakeout temperature does not exceed about 350°C, preferably about 330°C. The set point is that temperature above which the viscosity in a seal is sufficiently low that deformation can occur during a vacuum bakeout. That viscosity is about 10⁸ Mp·as (10⁹ poises).

In developing the present invention, three base glass frits have been employed. These glasses have compositions, as calculated in mole % from the glass batches, as follows:

| | 1 | 2 | 3 |
|---|---|---|---|
| P₂O₅ | 32.0 | 31.5 | 33.0 |
| Al₂O₃ | 0.7 | 0.6 | -- |
| CaO | 1.0 | -- | -- |
| ZnO | 14.6 | 14.6 | 14.9 |
| SnO | 51.2 | 51.2 | 52.1 |
| WO₃ | 0.5 | 0.6 | -- |
| B₂O₃ | -- | 1.5 | -- |

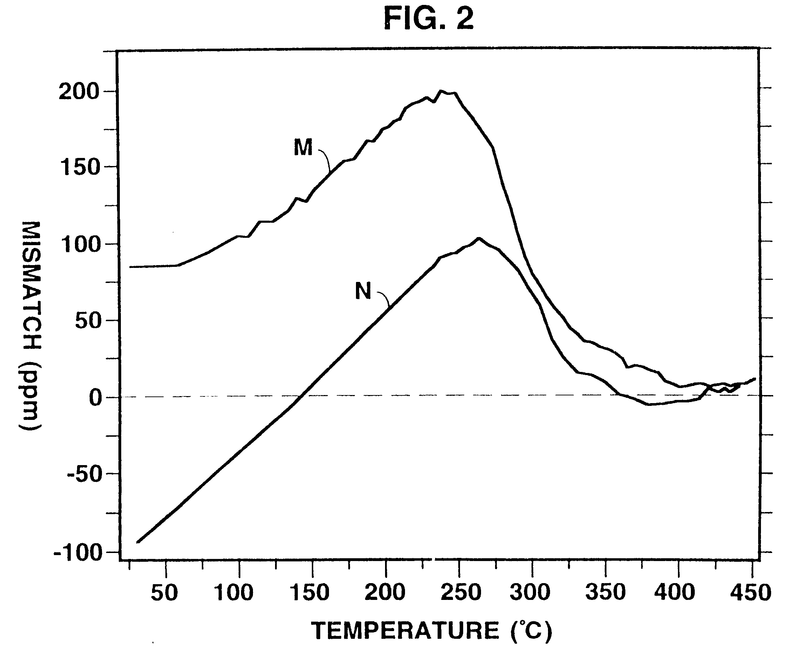

Example 3 is the glass frit used in the systems A, B, D and E, as described earlier, and illustrated in FIGURE 3, and in system M as described, infra, and illustrated in FIGURES 2 and 3. Example 2 is the composition of the modified frit used in systems C and N. Example 1 is a further modification that may be employed where B₂O₃ is considered undesirable.

The glass of Example 2 was employed with a mill addition composed of alumina and zircon to provide a sealing material composed of, in weight %: 72% glass frit, 21% zircon and 7% alumina, the system C shown infra. This system is designed for forming a seal at a temperature of 440-450°C, and for withstanding a bakeout at a temperature of 320-340°C.

It will be observed that Examples 1 and 2 represent substitutions of CaO and B₂O₃, respectively, for P₂O₅. Also, WO₃ is present in both compositions 1 and 2. It has been found that these substitutions, as well as substitutions of other alkaline earth metal oxides, such as BaO, SrO and MgO, also tend to stiffen the glass, that is increase its set point.

It is preferred to employ a glass frit consisting essentially in mole percent as calculated on an oxide basis of: 30-33% P₂O₅, 0-1% Al₂O₃, 0-1% WO₃, up to 5% of B₂O₃ or an alkaline earth metal oxide, preferably CaO, and SnO and ZnO in a molar ratio of about 3.5:1.

The mill addition disclosed earlier in this application alters the viscosity-temperature characteristics of a seal in such a manner that a CRT envelope can be baked out at 380-400°C. However, an undesirably high maximum tensile stress tends to develop during cooling or cycling of a seal. This may require additional strengthening.

Tensile stress occurs during cooling or reheating of a seal. The expansion characteristics and/or seal geometry of a seal and a substrate become sufficiently different so that they tend to contract away from each other. High tensile stress is a source of seal weakness that occasions a tendency for fracture or separation of the seal to occur if the stress reaches too great a value. FIGURE 2 in the accompanying drawing is a graphical illustration of tensile stress development.

In FIGURE 2, temperature in °C is plotted on the horizontal axis. Mismatch, in terms of parts per million (ppm) difference between the expansion characteristics of a seal and a substrate, is plotted on the vertical axis. It is this expansion mismatch that directly creates stress during heating or cooling of a seal. The horizontal axis represents a condition where there is no difference in expansion characteristics, that is, there is zero mismatch and hence no stress. Mismatch above that level on the y axis indicate tensile stress, while values below that level indicate compressive stress.

Curves M and N are curves illustrating how stress changes as a seal is cycled between the set point of a seal and ambient temperature. Curve N illustrates the temperature stress pattern as a seal produced in accordance with the present invention is cycled. Curve M illustrates a corresponding pattern for a sealing material in accordance with the related application. It is apparent that the maximum tensile stress developed is greater in the material represented by curve M.

Curves M and N represent measurements made on butt seals. Each seal was produced by bonding a thin layer of a sealing material to a substrate cut from a commercial cathode ray tube glass panel. The test seal in each instance was thermally cycled in a furnace. The differences in expansion (mismatch) between the sealing material and the substrate were measured employing a polariscope.

The sealing material used on the test piece for Curve M was composed of 70% glass frit and 30% mill addition. The latter consisted of 10% alumina and 20% zircon. The sealing material used on the test piece for Curve N was composed of 72% glass frit and a mill addition consisting of 7% alumina and 21% zircon. The sealing materials for Curve M employed a standard 33% P₂O₅ frit with a SnO:ZnO molar ratio of 3.5:1. The glass frit for Curve N was that of Example 2 above.

The distinction between the two types of alumina-zircon mill additions may be further seen in FIGURE 3 of the accompanying drawing. That FIGURE is a graphical representation of viscosity-temperature curves. Temperature in °C is plotted along the horizontal axis, and log viscosity in 10 Mp·as (poises) is plotted along the vertical axis.

The viscosity-temperature curves are based on data obtained by measurements made on five different sealing material systems as described earlier.

The viscosity-temperature curves for both the unfilled frit (A), the frit filled with 30% zircon (B), and the frit filled with the 7%/21% mix (C) are similar in nature. Each shows a sharp decrease in log viscosity with increasing temperature. This is typical of a material undergoing viscous flow. The mix for Curve C has a 10¹² Mp·as temperature of about 298°C.

However, extrapolation of Curve C to a log-viscosity value of 9 shows that the temperature will have a value of about 330°C in the range of 10⁸-10⁹ Mp·as (10⁹-10¹⁰ poises). Thus, combining the mill addition with frit permits producing a seal in a CRT tube providing the tube is baked out at a temperature under 350°C.

The viscosity-temperature curves for specimens D and E are distinctly different from those for A and B in that they do not show a decrease with increasing temperature. This means that a seal made with these materials will remain rigid and undeformed at bakeout temperatures up to 400°C. However, a large tensile stress maximum develops during cooling as illustrated in FIGURE 2.

Thus, seating materials with alumina-zircon mill additions containing greater than 10% by weight alumina must be used where a bakeout temperature greater than 350°C, in particular 380-400°C, is employed. However, where a bakeout temperature lower than 350°C, in particular 320-340°C, is employed, a sealing material containing an alumina-zircon mill addition with less than 10% alumina is used.

## Claims

1. A fusion sealing material consisting essentially of at least 60% by weight of a SnO-ZnO-P₂O₅ glass frit mixed with up to 40% by weight of a mill addition including alumina and zircon, which consists of either 10-30% alumina with up to 30% zircon and 0-15% of a further additive or 5-40% zircon with up to 10% alumina, the total of alumina and zircon being at least 15%, and 0-15% of a further additive, the additive amounts being based on the sealing material total, with the proviso that the mill addition does not contain 10% alumina and 25% zircon, and wherein the sealing material forms a viscoelastic seal having a set point of 300-350°C when the mill addition has an alumina content below 10%, and forms a non-viscoelastic seal when the mill addition has an alumina content above 10%.

2. A fusion sealing material in accordance with claim 1 wherein the mill addition constitutes at least 25% of the sealing material and is composed of 15-30% zircon and 5-10% alumina.

3. A fusion sealing material in accordance with claim 1 wherein the mill addition includes 10-30% alumina and up to 30% zircon, and is present in an amount of 20-35% by weight based on the total weight of the sealing material.

4. A fusion sealing material in accordance with any of claims 1 to 3 wherein the mill addition contains a further additive in an amount not exceeding 15% by weight of the sealing material, that reduces the effective CTE of a seal formed from the material, the further additive being selected from the group consisting of cordierite, metal pyrophosphates, silica glasses, quartz, Invar and solid solutions of beta-spodumene and beta-eucryptite.

5. A fusion sealing material in accordance with any of claims 1 to 4 wherein the glass frit consists essentially of 25-50 mole % P₂O₅ and SnO and ZnO in a molar ratio of 5:1 to 2:1, and optionally contains at least one modifying oxide selected from the group consisting of up to 5 mole % SiO₂, up to 20 mole % B₂O₃, up to 5 mole % Al₂O₃ and up to 5 mole % WO₃.

6. A fusion sealing material in accordance with claim 5 wherein the glass frit consists essentially of, in mole percent on an oxide basis, 30-33% P₂O₅, an oxide, in an amount not exceeding about 5%, selected from the group consisting of B₂O₃, alkaline earth metal oxides, and mixtures, and SnO and ZnO in a molar ratio of about 2:1 to 4.5:1.

7. A fusion sealing material in accordance with claim 6 wherein the selected oxide in the glass frit is selected from the group consisting of up to 5% B₂O₃, up to 5% alkaline earth metal oxide, 0-1% Al₂O₃, 0-1% WO₃ and mixtures, and the SnO:ZnO molar ratio is about 3.5:1.

8. A fusion seal between the surfaces of two bodies, the fusion seal being the fired product of a fusion sealing material in accordance with any of claims 1 to 7.

9. A method of altering the viscosity in a fusion seal to increase the temperature at which the seal can be baked out without deformation, the method comprising heating to sealing temperature a mixture consisting essentially of at least 60% by weight of a SnO-ZnO-P₂O₅ glass frit mixed with up to 40% by weight of a mill addition including alumina and zircon, which consists or either 10-30% alumina with up to 30% zircon and 0-15% of a further additive or 5-40% zircon with up to 10% alumina, the total of alumina and zircon being at least 15%, and 0-15% of a further additive, the additive amounts being based on the sealing material total, with the proviso that the mill addition does not include 10% alumina and 25% zircon, and wherein the viscosity of the seal is increased to provide a set point of at least 300°C with a mill addition containing less than 10% alumina, thereby enabling the seal to be baked out at a temperature up to 350°C, and wherein the viscosity is so altered as to render the seal non-viscoelastic by a mill addition containing more than 10% alumina, thereby enabling the seal to be baked out at a temperature of 350-400°C.

## Patentansprüche

1. Schmelzversiegelungsmaterial, bestehend im wesentlichen aus mindestens 60 Gew.-% einer SnO-ZnO-P₂O₅-Glasfritte im Gemisch mit bis zu 40 Gew.-% einer Mahlzugabe mit Aluminiumoxid und Zircon, die entweder aus 10-30% Aluminiumoxid mit bis zu 30% Zircon und 0-15% eines weiteren Additivs oder aus 5-40% Zircon mit bis zu 10% Alumiumoxid, wobei der Gesamtgehalt an Aluminiumoxid und Zircon wenigstens 15% beträgt, und 0-15% eines weiteren Additivs besteht, wobei die Additiv-Mengen sich auf den Gesamtgehalt an Versiegelungsmaterial beziehen, mit der Einschränkung, daß die Mahlzugabe nicht 10% Aluminiumoxid und 25% Zircon enthält, und wobei das Versiegelungsmaterial eine visko elastische Versiegelung mit einem Verfestigungspunkt von 300-350°C bildet, wenn die Mahlzugabe einen Alumiumgehalt von unter 10% aufweist und es eine nicht-viskoelastische Versiegelung bildet, wenn die Mahlzugabe einen Aluminiumoxidgehalt von über 10% aufweist.

2. Schmelzversiegelungsmaterial nach Anspruch 1,
wobei die Mahlzugabe aus zumindest 25% an Versiegelungsmaterial besteht und aus 15-30% Zircon und 5-10% Aluminiumoxid zusammengesetzt ist.

3. Schmelzversiegelungsmaterial nach Anspruch 1,
wobei die Mahlzugabe 10-30% Aluminiumoxid bis zu 30% Zircon enthält und sie in einer Menge von 20-35 Gew.-%, bezogen auf das Gesamtgewicht des Versiegelungsmaterials, vorliegt.

4. Schmelzversiegelungsmaterial nach einem der Ansprüche 1 bis 3,
wobei die Mahlzugabe ein weiteres Additiv in einer Menge von nicht über 15 Gew.-% des Versiegelungsmaterials enthält, das den tatsächlichen CTE-Wert einer aus dem Material gebildeten Versiegelung verringert, wobei das weitere Additiv aus der Gruppe ausgewählt wird, bestehend aus Cordierit, Metallpyrophosphaten, Silicagläsern, Quartz, Invar und Mischkristallen aus beta-Spodumen und beta-Eucryptit.

5. Schmelzversiegelungsmaterial nach einem der Ansprüche 1 bis 4,
wobei die Glasfritte im wesentlichen aus 25-50 Mol-% P₂O₅ und SnO und ZnO in einem Molverhältnis von 5:1 bis 2:1 besteht und sie wahlweise ein modifizierendes Oxid enthält, ausgewählt aus der Gruppe, bestehend aus bis zu 5 Mol-% SiO₂, bis zu 20 Mol-% B₂O₃, bis zu 5 Mol-% Al₂O₃ und bis zu 5 Mol-% WO₃.

6. Schmelzversiegelungsmaterial nach Anspruch 5,
wobei die Glasfritte im wesentlichen, ausgedrückt in Mol-% auf Oxidbasis, aus 30-33% P₂O₅, einem Oxid in einer Menge von nicht über etwa 5%, ausgewählt aus der Gruppe, bestehend aus B₂O₃, Erdalkalimetalloxiden und deren Mischungen, und SnO und ZnO in einem Molverhältnis von etwa 2:1 bis 4,5:1 besteht.

7. Schmelzversiegelungsmaterial nach Anspruch 6,
wobei das ausgewählte Oxid in der Glasfritte aus der Gruppe ausgewählt wird, bestehend aus bis zu 5% B₂O₃, bis zu 5% Erdalkalimetalloxid, 0-1% Al₂O₃, 0-1% WO₃ und deren Mischungen, und das SnO zu ZnO-Molverhältnis etwa 3,5:1 beträgt.

8. Schmelzversiegelung zwischen den Oberflächen zweier Körper,
wobei die Schmelzversiegelung das gebrannte Produkt eines Schmelzversiegelungsmaterials nach einem der Ansprüche 1 bis 7 ist.

9. Verfahren zur Veränderung der Viskosität in einer Schmelzversiegelung, um die Temperatur zu erhöhen, bei der die Versiegelung ohne Verformung ausgebacken werden kann, wobei das Verfahren folgendes umfaßt:
Erhitzen einer Mischung auf die Versiegelungstemperatur, wobei die Mischung im wesentlichen besteht aus zumindest 60 Gew.-% einer SnO-ZnO-P₂O₅-Glasfritte in Mischung mit bis zu 40 Gew.-% einer Mahlzugabe mit Aluminiumoxid und Zircon, die entweder aus 10-30% Aluminiumoxid mit bis zu 30% Zircon und 0-15% eines weiteren Additivs oder aus 5-40% Zircon mit bis zu 10% Aluminiumoxid, wobei der Gesamtgehalt an Aluminiumoxid und Zircon zumindest 15% beträgt, und 0-15% eines weiteren Additivs besteht, wobei die Additivmengen auf den Gesamtgehalt an Versiegelungsmaterial bezogen sind, mit der Einschränkung, daß die Mahlzugabe 10% Aluminiumoxid und 25% Zircon nicht umfaßt, und wobei die Viskosität der Versiegelung erhöht wird, um einen Verfestigungspunkt von wenigstens 300°C mit einer Mahlzugabe zu erhalten, die weniger als 10% Aluminiumoxid enthält, wodurch ermöglicht wird, daß die Versiegelung bei einer Temperatur von bis zu 350°C ausgebacken werden kann, und wobei die Viskosität so verändert wird, daß die Versiegelung durch eine Mahlzugabe, die mehr als 10% Aluminiumoxid enthält, nicht viskoelastisch wird, wodurch die Versiegelung bei einer Temperatur von 350-400°C ausgebacken werden kann.

## Revendications

1. Une matière de scellement par fusion constituée essentiellement d'au moins 60 % en poids d'une fritte de verre de SnO-ZnO-P₂O₅ mélangée avec jusqu'à 40 % en poids d'un apport de broyage comprenant de l'alumine et du zircon, qui consiste en 10 à 30 % d'alumine avec jusqu'à 30 % de zircon et 0 à 15 % d'un autre additif, ou en 5 à 40 % de zircon avec jusqu'à 10 % d'alumine, le total de l'alumine et du zircon étant d'au moins 15 %, et 0 à 15 % d'un autre additif, les quantités d'additifs étant exprimées par rapport à la totalité de la matière de scellement, avec la condition que l'apport de broyage ne contienne pas 10 % d'alumine et 25 % de zircon, et la matière de scellement formant un joint viscoélastique ayant un point de solidification de 300 à 350°C lorsque l'apport de broyage a une teneur en alumine inférieure à 10 %, et formant un joint non viscoélastique lorsque l'apport de broyage a une teneur en alumine supérieure à 10 %.

2. Une matière de scellement par fusion selon la revendication 1, dans laquelle l'apport de broyage constitue au moins 25 % de la matière de scellement et se compose de 15 à 30 % de zircon et 5 à 10 % d'alumine.

3. Une matière de scellement par fusion selon la revendication 1, dans laquelle l'apport de broyage comprend 10 à 30 % d'alumine et jusqu'à 30 % de zircon, et est présent en une quantité de 20 à 35 % en poids par rapport au poids total de la matière de scellement.

4. Une matière de scellement par fusion selon l'une quelconque des revendications 1 à 3, dans laquelle l'apport de broyage contient un autre additif en une quantité ne dépassant pas 15 % en poids de la matière de scellement, qui abaisse le CDT effectif d'un joint formé à partir de la matière, l'autre additif étant choisi dans le groupe formé par la cordiérite, les pyrophosphates métalliques, les verres de silice, le quartz, l'Invar et les solutions solides de bêta-spodumène et bêta-eucryptite.

5. Une matière de scellement par fusion selon l'une quelconque des revendications 1 à 4, dans laquelle la fritte de verre est constituée essentiellement de 25 à 50 mol % de P₂O₅ et de SnO et ZnO en un rapport molaire de 5:1 à 2:1, et contient facultativement au moins un oxyde modificateur choisi dans le groupe formé par jusqu'à 5 mol % de SiO₂, jusqu'à 20 mol % de B₂O₃, jusqu'à 5 mol % de Al₂O₃ et jusqu'à 5 mol % de WO₃.

6. Une matière de scellement par fusion selon la revendication 5, dans laquelle la fritte de verre est constituée essentiellement, en moles pour cent sur la base des oxydes, de 30 à 33 % de P₂O₅, un oxyde, en une quantité ne dépassant pas environ 5 %, choisi dans le groupe formé par B₂O₃, les oxydes de métaux alcalino-terreux et leurs mélanges, et SnO et ZnO en un rapport molaire d'environ 2:1 à 4,5:1.

7. Une matière de scellement par fusion selon la revendication 6, dans laquelle l'oxyde choisi dans la fritte de verre est choisi dans le groupe formé par jusqu'à 5 % de B₂O₃, jusqu'à 5 % d'oxyde de métal alcalino-terreux, 0 à 1 % de Al₂O₃, 0 à 1 % de WO₃, et leurs mélanges, et le rapport molaire SnO:ZnO est d'environ 3,5:1.

8. Un joint de scellement par fusion entre les surfaces de deux corps, le joint de scellement par fusion étant le produit cuit d'une matière de scellement par fusion selon l'une quelconque des revendications 1 à 7.

9. Un procédé pour modifier la viscosité d'un joint de scellement par fusion afin d'élever la température à laquelle le joint peut être cuit sans déformation, le procédé consistant à chauffer à une température de scellement un mélange constitué essentiellement d'au moins 60 % en poids d'une fritte de verre de SnO-ZnO-P₂O₅ mélangée avec jusqu'à 40 % en poids d'un apport de broyage comprenant de l'alumine et du zircon, qui consiste en 10 à 30 % d'alumine avec jusqu'à 30 % de zircon et 0 à 15 % d'un autre additif, ou en 5 à 40 % de zircon avec jusqu'à 10 % d'alumine, le total de l'alumine et du zircon étant d'au moins 15 %, et 0 à 15 % d'un autre additif, les quantités d'additifs étant exprimées par rapport à la totalité de la matière de scellement, avec la condition que l'apport de broyage ne contienne pas 10 % d'alumine et 25 % de zircon, et dans lequel la viscosité du joint est augmentée pour offrir un point de solidification d'au moins 300°C avec un apport de broyage contenant moins de 10 % d'alumine, en permettant ainsi au joint d'être cuit à une température d'au plus 350°C, et la viscosité est modifiée de manière à rendre le joint non viscoélastique par un apport de broyage contenant plus de 10 % d'alumine, en permettant ainsi au joint d'être cuit à une température de 350 à 400°C.
